# EUROPEAN PATENT SPECIFICATION

(11) **EP 4 417 831 B1**
(45) Date of publication and mention of the grant of the patent: **29.04.2026**
(21) Application number: 24153887.5
(22) Date of filing: 25.01.2024
(51) Int. Cl.: F16D 51/20, F16D 51/22, F16D 51/00

(54) **BRAKE FOR TRAILER AXLES OF AGRICULTURAL TYPE**
BREMSE FÜR ANHÄNGERACHSEN LANDWIRTSCHAFTLICHER ART
FREIN POUR ESSIEUX DE REMORQUE DU TYPE AGRICOLE

(30) Priority: 17.02.2023 IT 202300002778
(43) Date of publication of application: 21.08.2024
(73) Proprietor: A.D.R. S.p.A., 20151 Milano (IT)
(72) Inventor: RADRIZZANI, Flavio, 21040 Uboldo (Varese) (IT)
(74) Representative: Rapisardi, Mariacristina

(56) References cited:
- WO-A1-2016/041790
- US-A- 3 650 360
- US-A- 4 552 254
- US-A- 6 148 968
- US-A1- 2015 122 603

## Description

The present invention relates to a brake for trailer axles of agricultural type.

It is well known that trailers axles of agricultural type for reasons of economy and simplicity of construction traditionally feature drum brakes in which the pair of brake shoes with friction material is articulated on a single common fulcrum point.

As is well known, the manufacturing and assembly of the various axle and brake components can have significantly different tolerances.

The machining and coupling of the axle ends with the rolling bearings and wheel hub, as well as the coupling of the brake drum with the wheel hub, can have tolerances in the order of a hundredth of a millimeter, within which the longitudinal axis of the axle coincides with the axis of the wheel hub and brake drum.

The so-called 'brake mass', consisting of a pair of brake shoes mounted on a single pivot fixed to a 'brake plate', is coupled differently to the axle, for reasons of constructional simplicity and economy, with a procedure whereby the brake plate is welded to the axle: the greater tolerances and different thermal shrinkage of the components can result in a coupling between the brake plate, and therefore the brake mass, and the axle in which the respective axles are offset by amounts of up to a few millimeters.

It is also known that this misalignment consequently leads to an eccentricity of the brake shoes and their respective friction materials with respect to the internal surface of the drum on which the braking action develops: this eccentricity causes a limitation of the braking power, differentiated wear of the friction materials, vibrations during braking, and at the limit the breakage of the friction materials with blockage of the brake or cancellation of braking, with devastating consequences for the safety of the operators and the trailer.

There are solutions to this technical problem, but they require simultaneous and coordinated assembly of the brake mass components with the axle, which could lead to operational difficulties and delays in the assembly of the axle as a finished product.

There is therefore a need to improve the design of a known agricultural trailer axle brake.

WO2016/041790 A1, US4552254 A, US6148968 A, US3650360 A and US 2015/122603 A1 disclose a brake for trailer axles according to the preamble of claim 1.

The technical task of the present invention is, therefore, to realize a brake for trailer axles of agricultural type that eliminates the complained of technical drawbacks of the known technique.

In the context of this technical task, one aim of the invention is to realize a brake for trailer axles of agricultural type which ensures a coincidence between the technical axis, i.e. the ideal axis of the brake shoes when braking, and the longitudinal axis of the axle, the wheel hub and the brake drum, whereby the brake mass can be fitted separately and prior to coupling with the brake plate connected to the vehicle axle.

Another purpose of the invention is to realize a brake for trailer axles of agricultural type that keeps the ideal brake shoes axis coincident with the longitudinal axis of the axle, the wheel hub and the brake drum.

A further aim of the invention is to realize a brake for agricultural trailer axles which maintains the ideal brake shoe axis coincident with the longitudinal axis of the axle, wheel hub and brake drum fixed in time by simple, easy-to-activate and inexpensive means.

The technical task, as well as these and other purposes, according to the present invention are achieved by realizing a brake for trailer axles of agricultural type comprising at least one axle, a wheel hub, a brake drum and a brake mass rigidly connected to said axle and comprising at least one brake plate, at least two shoes equipped with friction material and an articulating pin of said two shoes having a stem removably housed in an axial direction in a hole provided on said brake plate, characterised in that said pin has at least one first ring having a radially internal surface provided with removable engagement means engaging with said stem and a radially external surface provided with a circumferential engagement groove for said two shoes, in that said stem of said pin is housed with radial clearance in said hole and in that locking means is provided with a set centre distance between the axis of said pin and the axis of said hole, said locking means comprising at least two reciprocally engaged conjugate surfaces.

According to a form of embodiment of the present invention, at least one of at least two mutually engaged conjugate surfaces has a rippled finish.

According to an embodiment of the present invention, the removable engagement means comprise a thread of the radially internal cylindrical surface of the first ring tightened to a counter thread of the cylindrical stem, and the articulating pin has a tightening head to the hole positioned on the opposite side of the hole relative to the at least one first ring.

According to a form of embodiment of the present invention, the removable engagement means comprise a shaped profile of the radially internal cylindrical surface of the first ring engaged with a complementarily shaped profile of the cylindrical stem, wherein the shaped profile and the complementarily shaped profile realize a shape engagement that makes said first ring and said stem solidly constrained in rotation but not in translation, wherein the articulating pin has a tightening nut to the hole positioned on the opposite side of the hole relative to the at least one first ring.

According to a form of embodiment, the pin has at least a second ring fitted freely rotatable on said pin and having a radially external surface provided with a circumferential engagement groove for said two shoes, wherein said second ring is positioned on the opposite side of said hole relative to said first ring, each of said two shoes comprising a first shoes rib and a second shoe rib respectively engaged in said circumferential groove of said first ring and in said circumferential groove of said second ring.

The invention also discloses a method for making the brake for trailer axles of agricultural type, comprising the steps of:
- Pre-assembling the brake mass consisting of at least two brake shoes and at least one first ring engaged with the shoes;
- presenting the brake mass to the brake plate integral with the axle;
- Coupling the brake mass with the brake plate by means of the pin engaged with radial clearance through a hole in the brake plate with at least the first ring engaged with the shoes;
- activating the brake, whereby the brake shoes are free to perform a radial movement equal to the movement of the axis of the pin with respect to the axis of the hole;
- making the brake shoes with the friction material adhere to the surface of the inner wall of the drum;
- self-centring the braking shoes under braking, making a braking activation axis to coincide with a longitudinal axis of the brake drum, of the wheel hub and of the axle, in this movement the brake shoes dragging the pin to a new thus defined position of the axis of the pin relative to the axis of the hole; and
- rigidly and firmly locking the pin in that new position in relation to the hole through the removable engagement means, engaging the conjugate surfaces reciprocally, where favorably in some forms of execution, at least one of which has a rippled finish.

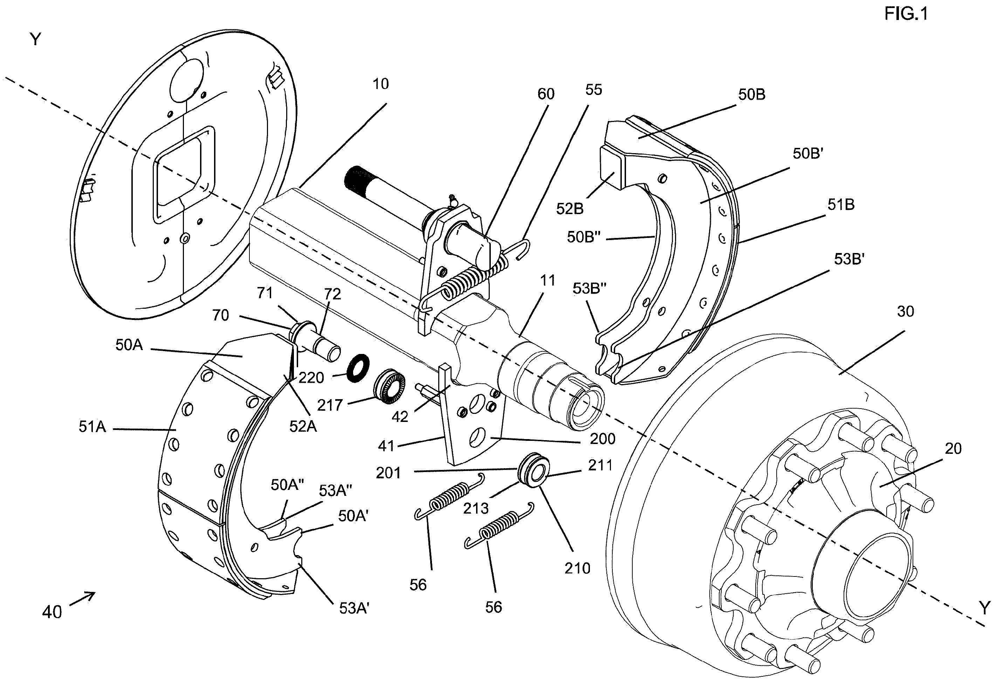

Further features and advantages of the invention will become more apparent from the description of preferred but not exclusive forms of execution of the brake for agricultural trailer axles according to the invention, illustrated by way of illustration and not limitation in the accompanying drawings, in which
Figure 1 shows an exploded axonometric view of an axle end with a brake, according to an embodiment of the invention;

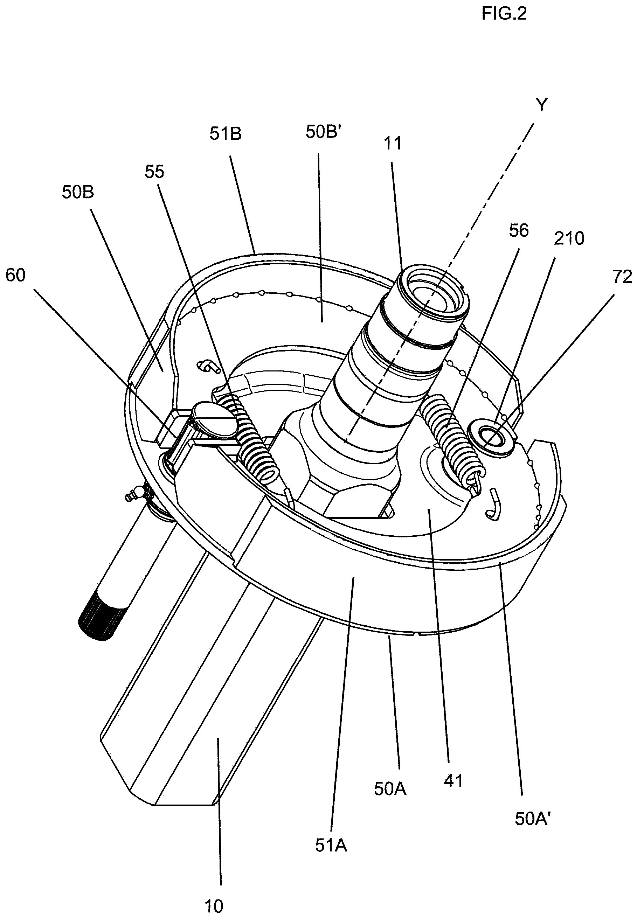

Figure 2 shows a perspective view of one end of an axle with single rib shoes;

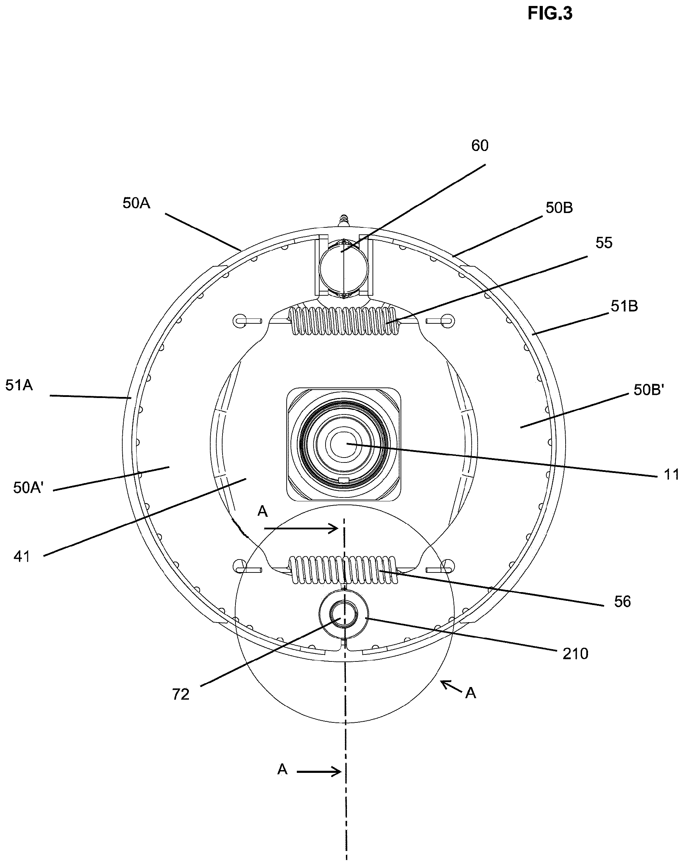

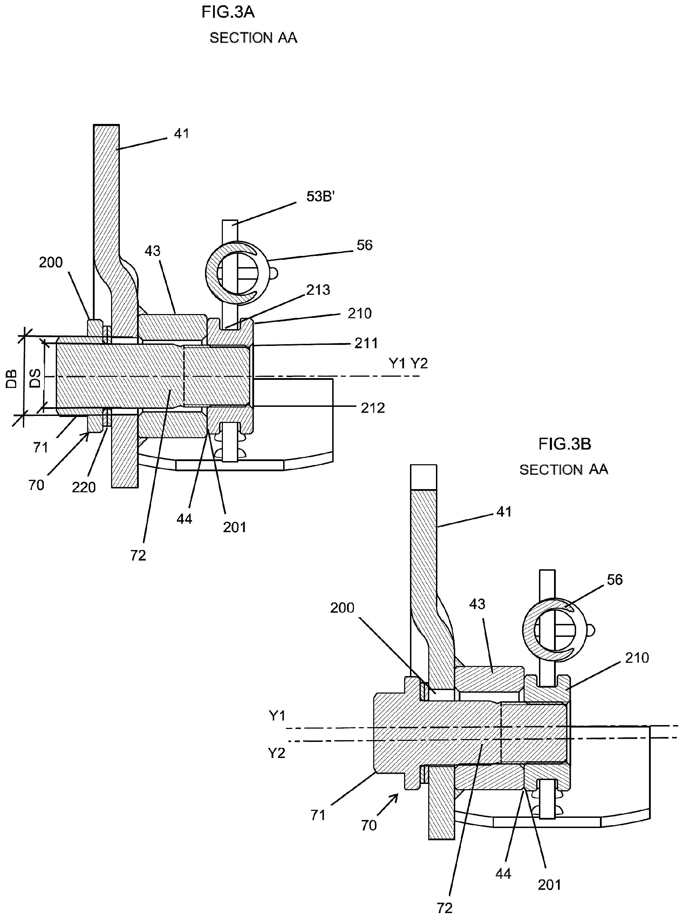

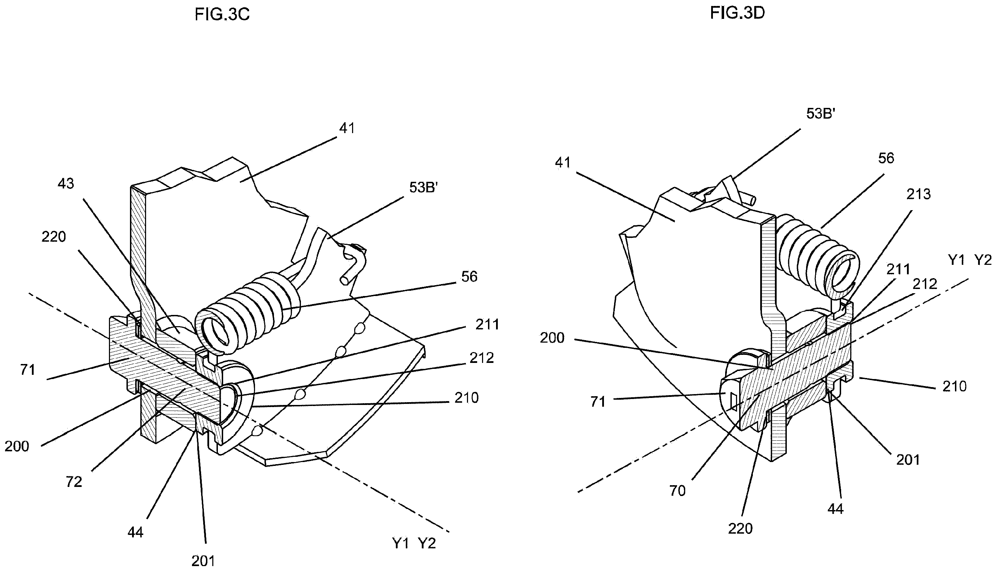

Figures 3, 3A-D show a first embodiment of the invention respectively: a side view of the mounted shoes, a first and a second section AA of a detail A with the reciprocal positions of the axes Y1-Y2 before and after self-centring of the shoes, an external axonometric view of the detail A on the section AA, an internal axonometric view of the detail A on the section AA;

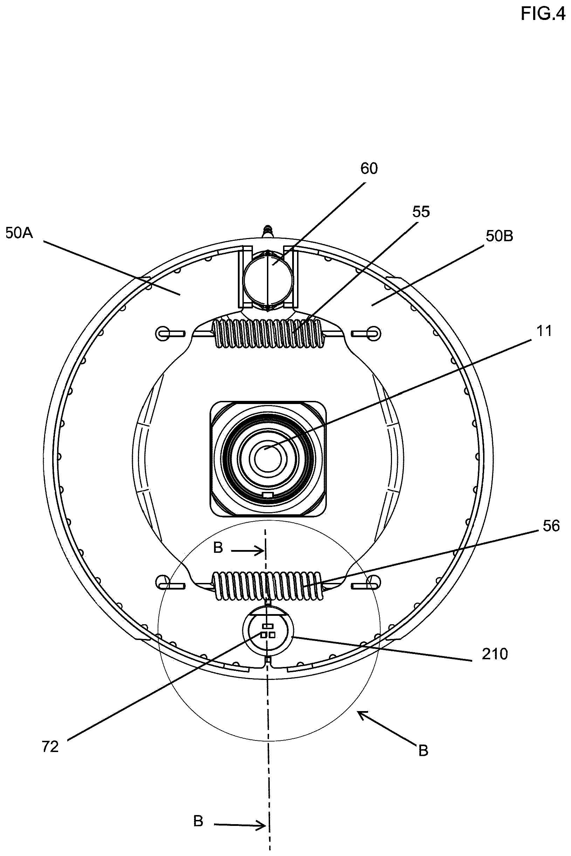

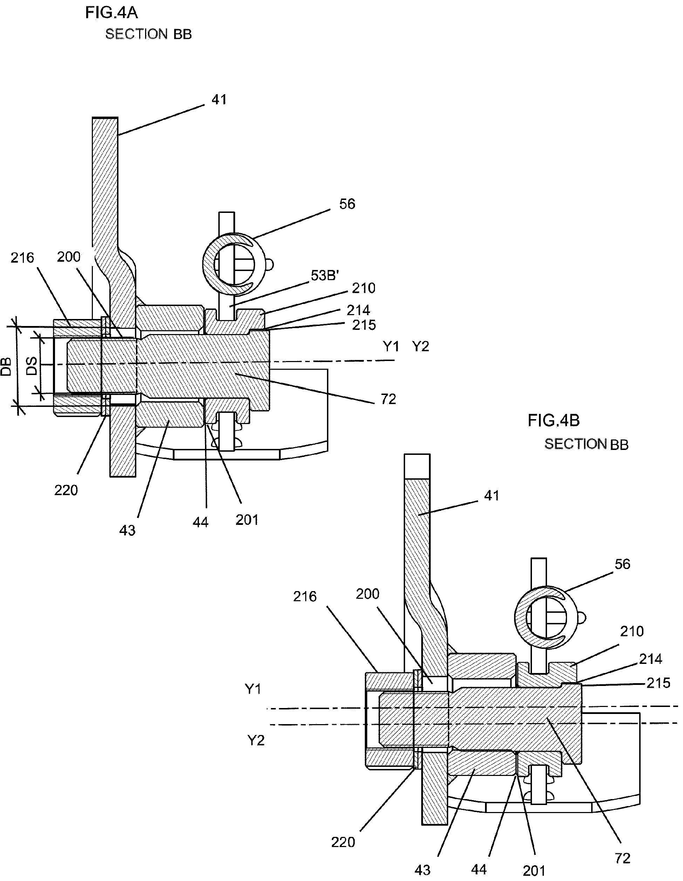

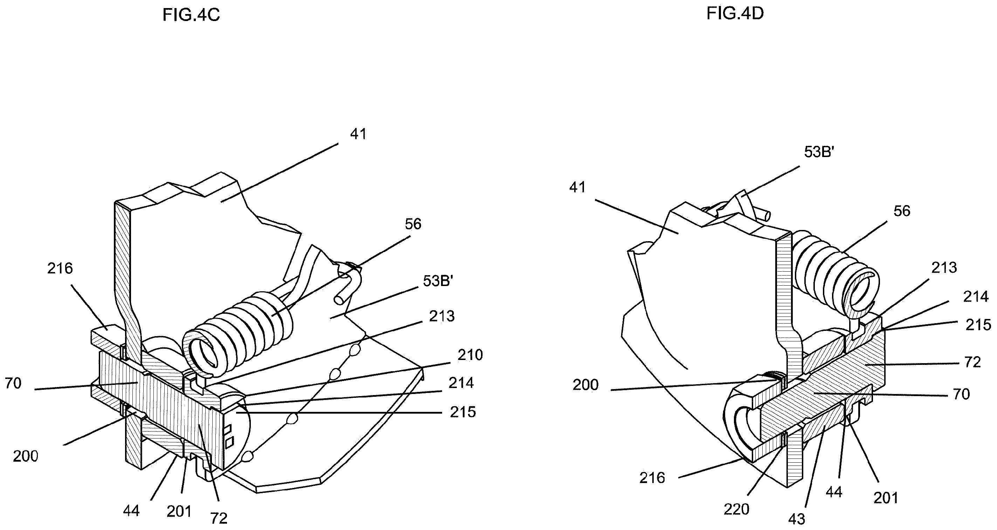

Figures 4, 4A-D show a second embodiment, respectively: a side view of the mounted shoes, a first and a second BB section of a detail B with the reciprocal positions of the Y1-Y2 axes before and after self-centring of the shoes, an external axonometric view of detail B on section BB, an internal axonometric view of detail B on section BB;

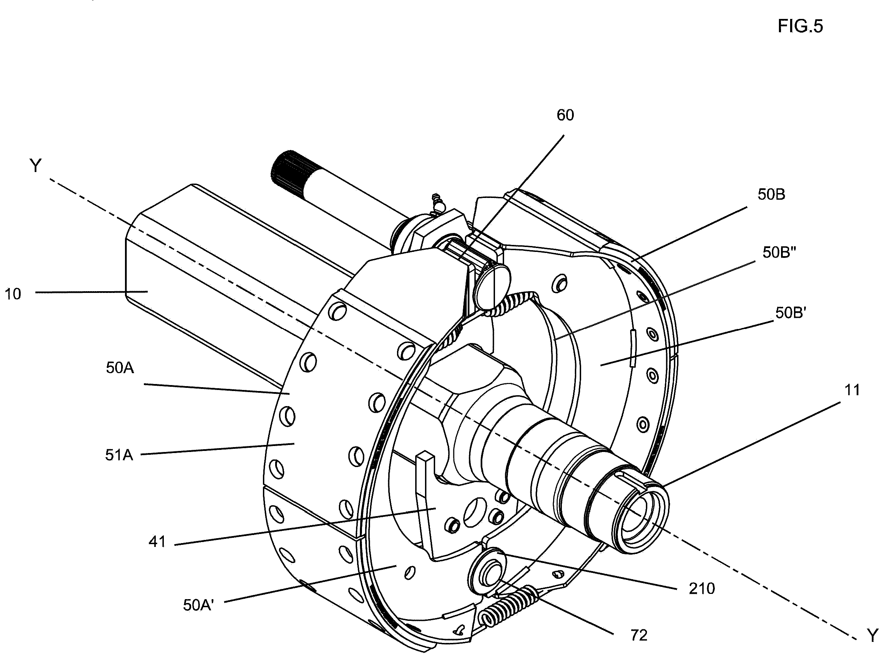

Figure 5 shows a perspective view of one end of an axle with double-ribbed shoes;

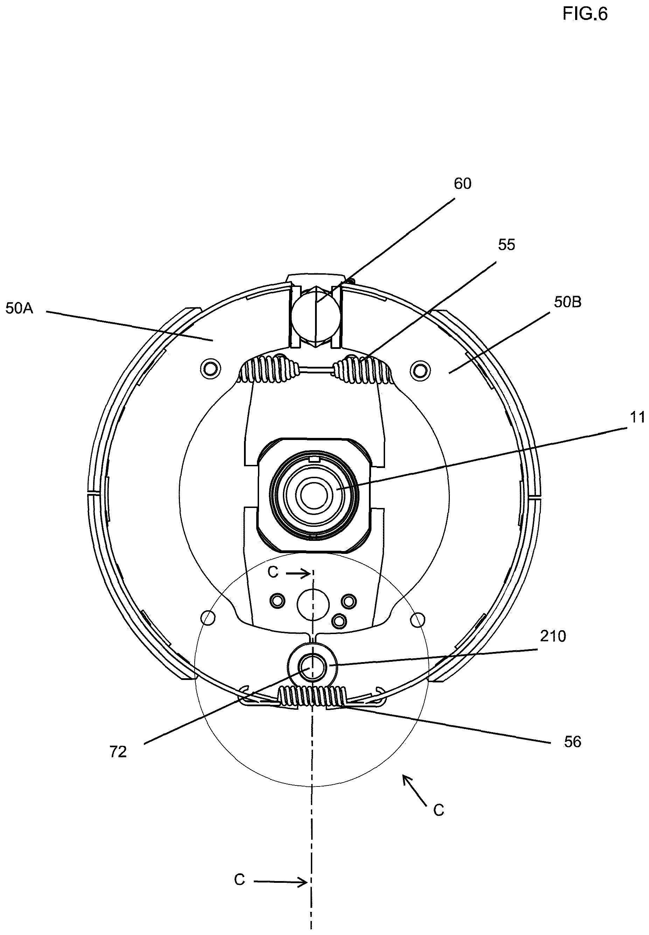

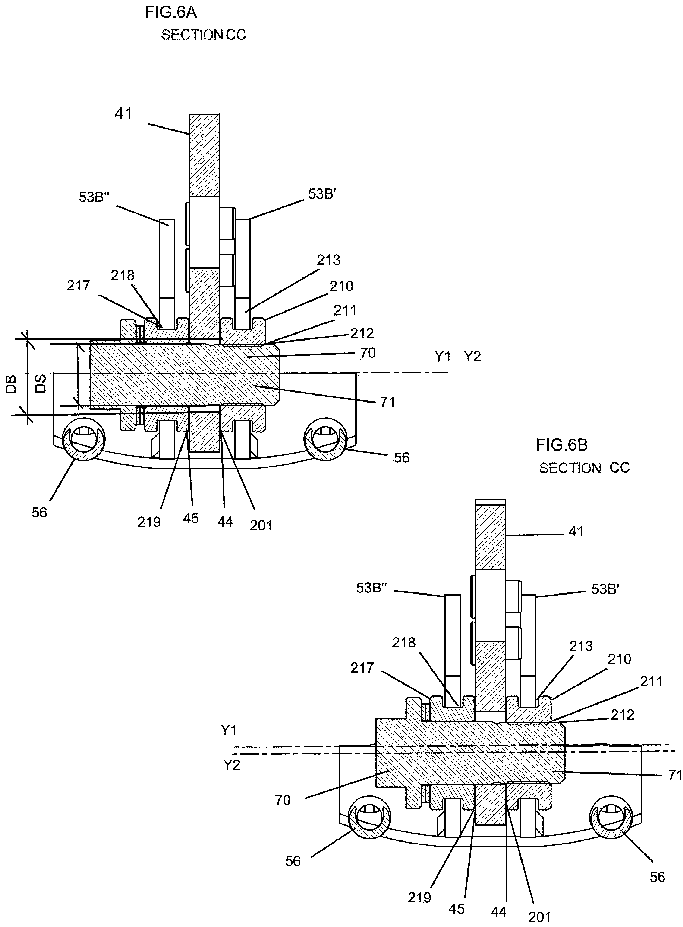

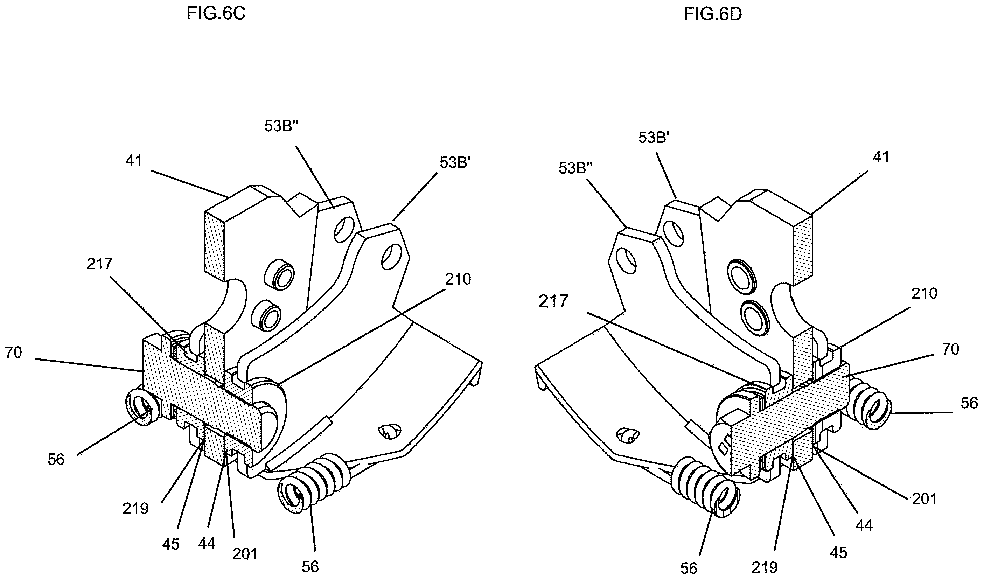

Figures 6, 6A-D show in a third embodiment, respectively: a side view of the mounted shoes, a first and a second CC section of a C detail with the reciprocal positions of the Y1-Y2 axes before and after self-centring of the shoes, an external axonometric view of the C detail on the CC section, an internal axonometric view of the C detail on the CC section;

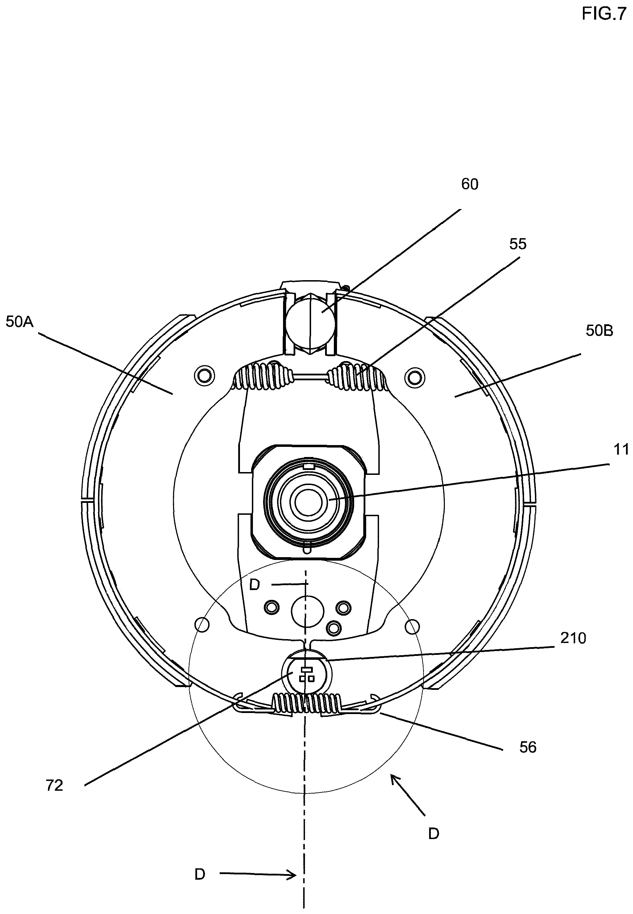

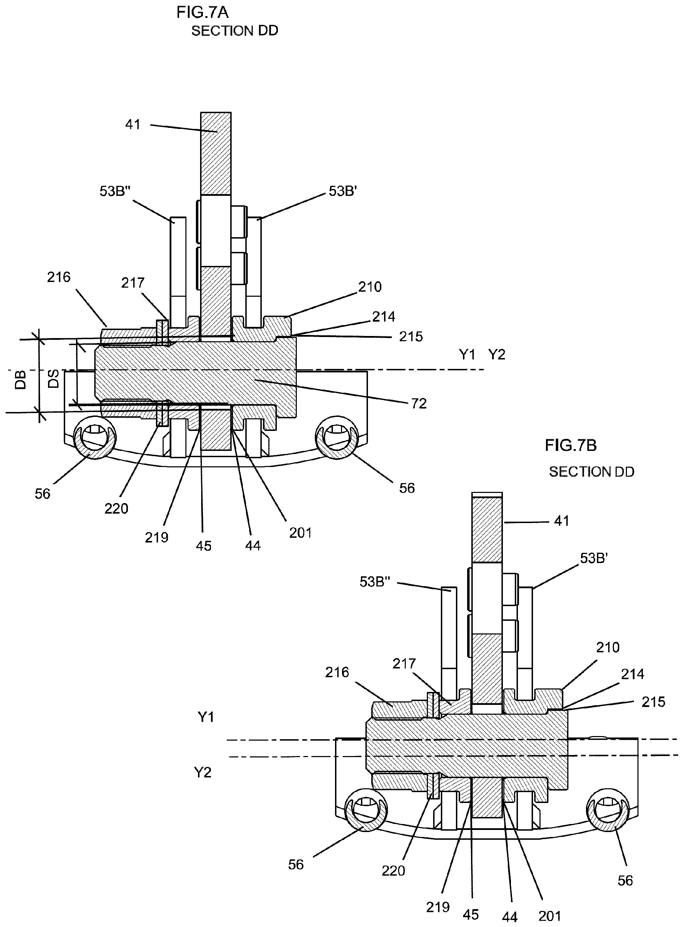

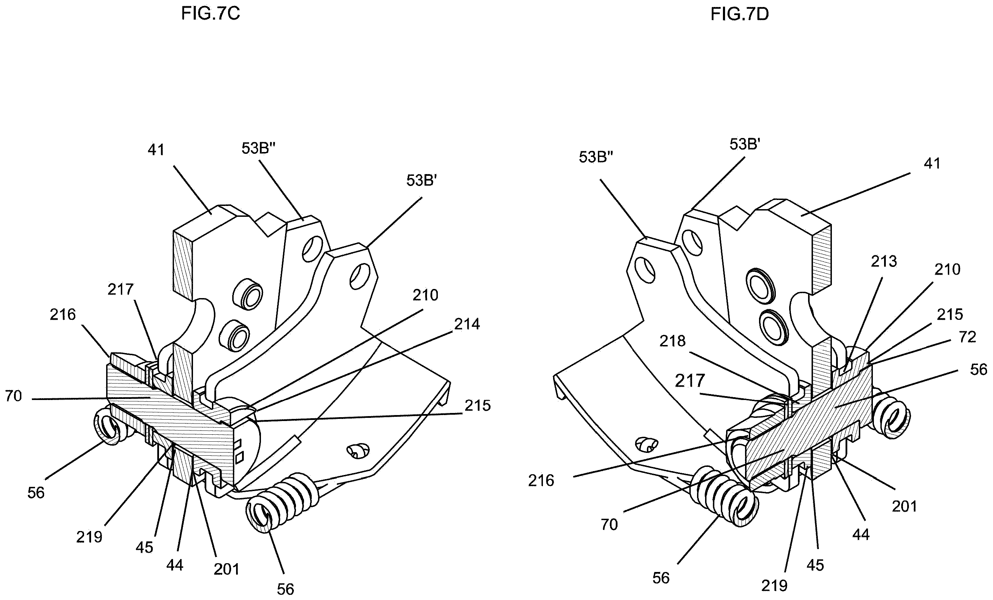

Figures 7, 7A-D show in a fourth embodiment, respectively: a side view of the mounted shoes, a first and a second DD section of a D detail with the reciprocal positions of the Y1-Y2 axes before and after self-centring of the shoes, an external axonometric view of the D detail on the DD section, an internal axonometric view of the D detail on the DD section;

The following detailed description refers to the attached drawings, which form part of it.

In drawings, similar reference numbers typically identify similar components, unless the context indicates otherwise.

The illustrative forms of realization described in the detailed description and drawings are not intended in a limiting sense.

Other forms of realization may be used, and other modifications may be made without departing from the spirit or scope of the subject matter depicted here.

The aspects of this description, as generally described in this context and illustrated in the figures, can be arranged, substituted, combined, and designed in a wide variety of different configurations, all of which are explicitly contemplated and are part of this description.

With reference to the above-mentioned figures, a brake for trailer axles of agricultural type is shown with the overall reference number 1.

The brake for trailer axles of agricultural type 1 comprises at least one axle 10 fixed to the trailer through fixings means not shown in the figures and axially connected at its end 11 through rotational fixings means, typically rolling bearings, with the wheel hub 20, to which the wheel, not shown in the figures for simplicity of representation, is rigidly attached.

The brake drum 30 is rigidly attached to the wheel hub 20, which the wheel hub 20 pulls as the wheel rolls on the ground in rotation around the longitudinal axis Y of axle 10.

The brake mass 40 comprises at least one brake plate 41 and at least one pair of brake shoes 50 A and 50 B, substantially opposite and symmetrical with respect to an axis perpendicular to the Y-axis.

The brake mass 40 becomes integral with the fixed axle 10 through the rigid connection of the brake plate 41 with the axle 10, typically by welding along the edges of a seat 42.

The 50 A and 50 B shoes are equipped with friction material 51 A and 51 B respectively.

The two shoes 50 A and 50 B are elastically connected to each other by elastic means, typically at least a coil spring, typically at least a first spring 55, and preferably, but not necessarily, at least a second spring 56.

The at least first spring 55 holds and engages symmetrically the two upper ends 52 A and 52 B of the two braking shoes 50 A and 50 B against a braking activation cam 60.

The at least one second spring 56 cooperates favourably in the symmetrical engagement of at least the two lower ends 53 A' and 53 B' of a first pair of ribs 50 A' and 50 B' of the two free rotating shoes 50 A and 50 B around a fulcrum of rotation coinciding with an axis Y1 substantially parallel to the axis Y, and coinciding with the axis of a pin 70 removably housed axially in a hole 200 of the brake plate 41.

The pin 70 then acts as the pivot point for the articulation of the shoes 50 A and 50 B.

The articulating pin 70 of the two brake shoes 50A, 50B has a stem 72 removably housed axially in the hole 200 provided in the brake plate 41.

Innovatively and advantageously, the pin 70 has at least a first ring 210 having a radially internal surface provided with removable means 211, 214 of engagement with the stem 72, and a radially external surface provided with a circumferential groove 213 of engagement for a first pair of ribs 50 A' and 50 B' of the two shoes 50 A, 50 B respectively.

Advantageously, the stem 72 of the pin 70 is housed with radial clearance in the hole 200 and locking means are provided with a set centre distance between the axis Y1 of the pin 70 and the axis Y2 of the hole 200.

Appropriate clamping means 76, 216 of the pin 70 are provided against the hole 200 of the plate 41.

The radial clearance of the stem 72 of the pin 70 housed in hole 200 is equal to the difference of the diameter DB of the hole 200 and the outer diameter DS of the stem 72.

Advantageously, the locking means comprise at least two reciprocally conjugated surfaces 44, 45, 201, 219.

Advantageously, in some embodiments, at least one of the two reciprocally engaged conjugate surfaces 44, 45, 201, 219 exhibits a rippled finish.

Advantageously, the rippled finish preferably takes the form of radial or diamond rippling. Typically, at least one of these conjugate surfaces coincides with the surface 201 of the circular crown of the first ring 210, which occurs towards plate 41.

A first form of execution is depicted in Figures 3, 3A-D.

Plate 41 comprises a rigidly fixed bushing 43, typically welded.

The bushing 43 surrounds the hole 200 and has an axial cavity with cylindrical generators arranged on the extension of the cylindrical generators of the hole 200.

The stem 72 has an outer diameter DS significantly smaller than the internal diameter DB of the bushing 43, which in turn has a longitudinal axis coaxial to the axis Y2 of hole 200.

The stem 72 is therefore housed in bushing 43 with radial clearance, given by the difference in DB with DS, and the axis Y1 of the pin 70 may coincide but not necessarily with the axis Y2 of bushing 43.

The stem 72 is longer than the bushing 43 and the end opposite the head 71 has a thread 212.

The removable engagement means comprise a thread 211 of the radially internal cylindrical surface of the first ring 210 tightened to the thread 212 of the cylindrical stem 72.

The articulating pin 70 has a tightening head 71 for tightening to said plate 41 at the hole 200 positioned on the side opposite the plate 41 relative to the first ring 210.

Typically, anti-unscrewing washers 220 are inserted between the tightening head 71 and the plate 41 on the stem 72.

In this embodiment, the pair of reciprocally engaged conjugate surfaces comprises at least one surface 44 of the bushing 43 and one surface 201 of the circular crown of the first ring 210.

A second embodiment is illustrated in Figures 4, 4A- D .

In such embodiment, the removable engagement means comprise a shaped profile 214 of the radially internal cylindrical surface of the first ring 210 engaged with a complementary shaped profile 215 of the cylindrical stem 72.

The shaped profile 214 and the complementary shaped profile 215 realise a shape engagement that makes the first ring 210 and the stem 72 solidly constrained in rotation but not in translation.

The articulating 70 has a tightening nut 216 for tightening to the plate 41 at the hole 200 positioned on the opposite side of the hole 200 relative to the first ring 210.

Typically, anti-unscrewing washers 220 are inserted between tightening nut 216 and the plate 41 on the stem 72.

Also in this embodiment, the pair of reciprocally engaged conjugate surfaces comprises at least one surface 44 of the bushing 43 and one surface 201 of the circular crown of the first ring 210.

A third embodiment is illustrated in Figures 6, 6 A-D.

In this embodiment, each of the two brake shoes 50 A, 50B has a first shoe rib 50 A', 50B' and respectively a second shoe rib 50 A", 50B" parallel to the first shoe rib, opposed and positioned symmetrically on the opposite side with respect to the plate 41.

The second ribs of the shoe 50A", 50B" have a lower end respectively 53 A" and 53 B" .

Advantageously and innovatively, the pin 70 has at least a second ring 217 freely rotatable on the stem 72 and positioned on the opposite side of the hole 200 relative to the first ring 210.

The second ring 217 has a radially external surface with a circumferential groove 218 engaging the lower ends 53 A" and 53 B" of the second shoe ribs 50 A", 50 B" of the two shoes 50 A, 50 B. The lower ends 53 A' and 53 B' of the first shoe ribs 50 A' and 50 B' are engaged in the circumferential groove 213 of the first ring 210; the lower ends 53 A" and 53 B" of the second shoe ribs 50 A" and 50 B" are engaged in the circumferential groove 218 of the second ring 217.

In analogy to the first embodiment, the removable engagement means comprise a thread 211 of the radially internal cylindrical surface of the first ring 210 tightened to the thread 212 of the cylindrical stem 72.

The articulating pin 70 has a tightening head 71 for tightening to the plate 41 at the hole 200 positioned on the opposite side of the hole 200 and the second ring 217 relative to the first ring 210.

Typically, anti-unscrewing washers 220 are inserted between the tightening head 71 and the second ring 217 on the stem 72.

Advantageously, in this embodiment, the pair of reciprocally engaged conjugate surfaces comprises at least one surface 44 of the plate 41 and one surface 201 of the circular crown of the first ring 210, and one surface 45 of the plate 41 and one surface 219 of the circular crown of the second ring 217. A fourth embodiment is illustrated in Figures 7, 7A-D , wherein in analogy to the third embodiment the shoes 50 A and 50 B have a second rib 50 A" and 50 B", and the pin 70 has at least a second ring 217 freely rotatable mounted on the stem 72 and positioned on opposite side of the hole 200 and the plate 41 relative to the first ring 210.

In analogy to the second embodiment, the removable engagement means comprise a shaped profile 214 of the radially internal cylindrical surface of the first ring 210 engaged with a complementarily shaped profile 215 of the cylindrical stem 72.

The shaped profile 214 and the complementarily shaped profile 215 create a shape engagement that makes the first ring 210 and the stem 72 solidly constrained in rotation but not in translation. The articulating pin 70 has a tightening nut 216 for tightening to the plate 41 at the hole 200 positioned on the opposite side of the hole 200 and of the second ring 217 relative to the first ring 210.

Typically, anti-loosening washers 220 are inserted between the tightening nut 216 and the second ring 217 on the stem 72.

Also in this embodiment, the pair of reciprocally engaged conjugate surfaces comprises at least one surface 44 of the plate 41 and one surface 201 of the circular crown of the first ring 210, and one surface 45 of the plate 41 and one surface 219 of the circular crown of the second ring 217.

The operation of brakes for trailer axles of agricultural type according to the invention is apparent from what is described and illustrated and, in particular, is as follows.

The brake for trailer axles of agricultural type 1 is initially assembled by welding the brake plate 41 to the axle 10.

Advantageously, according to the present invention, the pair of the two brake shoes 50 A, 50 B equipped with friction material 51 A, 51 B is pre-assembled separately comprising at least the first ring 210 held in contrast opposition by at least the lower ends 53 A' and 53 B' of at least the first pair of ribs 50 A' and 50 B' under the action of the first spring 55 and the second spring 56.

This brake mass thus composed is presented to the brake plate 41 integral with the axle 1, to which it is coupled by means of a pin 70 engaged with radial clearance through a hole 200 in the brake plate 41 and with at least the first ring 210 engaged with the brake shoes 50 A and 50 B; the removable engagement means 211, 214 of at least the first ring 210 with the stem 72 of the pin 70 are engaged but not tightened.

Due to the type and tolerances of the welding process, the geometric axis Y1 of the shoes assembly 50 A and 50 B pivoted on pin 70 does not necessarily coincide with the geometric axis Y of axle 10.

The assembly axle 10 - brake mass 40 is assembled with the wheel hub 20 to which is attached the drum 30 free to rotate around the geometric axis Y of axle 10.

When the activation cam 60 is actuated, by control means not shown in the figure, it moves the ends 52 A and 52 B of the shoes 50 A and 50 B away from each other, and the friction material 51 A and 51 B respectively engages with the surface of the inner wall of the drum 30, slowing its rotation and thus activating the braking.

A first braking is performed, and the shoes 50 A and 50 B, free of radial movement of the geometric axis Y1 of the pin 70 with respect to the geometric axis Y2 of the hole 200 within the limits of the difference of the diameter DS of the stem 72 and the diameter DB of the hole 200, adhere with the friction material 51 A and 51 B respectively to the surface of the inner wall of the drum 30 and self-centre by dragging the axis Y1 of the axle 70 in activation during braking - within the limits described above - to coincide with the longitudinal axis Y of the brake drum, the wheel hub and the axle.

In such a movement, the shoes 50 A and 50 B drive at least the first ring 210 infulcrated on the pin 70, and thus the stem 72 in the hole 200, to a new position thus defined of the axis Y1 with respect to the axis Y2 of the hole 200.

This new position ensures that the shoes 50 A and 50 B are centred in relation to the inner wall of drum 30, thus guaranteeing effective, balanced and reliable braking over time.

In this new position, the pin 70 with axis Y1 is rigidly and firmly tightened against the hole 200 with axis Y2 through the tightening means 71, 216 of the removable engagement means 211, 214 of at least the first ring 210.

The tightening of the removable engagement means on the end of the stem 72 thus determines the engagement between at least one pair of surfaces 44, 201 in the first and second embodiments illustrated in Figures 3 A-D and 4 A-D, and at least two pairs of surfaces 44, 201 and 45, 219 in the third and fourth embodiments illustrated in Figures 6 A-D and 7 A- D.

By way of illustration, and with reference to the first and second embodiments of the invention, Figures 3 A-B and 4 A-B schematically illustrate the reciprocal positions of the components of the brake mass 40, and in particular of the axes Y1 and Y2, prior to and subsequent to the self-centring of the brake shoes 50 A and 50 B against the inner surface of the drum 30: Figures 3 A and 4 A illustrate the preliminary position of the axes Y1 and Y2, typically coinciding with each other in the pre-assembly phase; Figures 3 B and 4 B illustrate the example of a maximum axial movement of the axle Y1 of the pin 70 with respect to the axle Y2 of the hole 200, at the limit of the difference of the diameters DB of the hole 200 and DS of the stem 72.

In the condition illustrated in the exemplary figures 3 B and 4 B, the engagement of the nut 216 and the mutual engagement of the engagement surface 201 of the first ring 210 with the engagement surface 44 of the bushing 43 are activated.

With reference to the third and fourth embodiments of the invention, Figures 6 A-B and 7 A-B schematically illustrate the reciprocal positions of the components of the brake mass 40, and in particular of the axes Y1 and Y2, before and after the self-centring of the brake shoes 50 A and 50 B against the inner surface of the drum 30: Figures 6 A and 7 A illustrate the preliminary position of the axes Y1 and Y2, typically coinciding with each other in the pre-assembly phase; Figures 6 B and 7 B illustrate the example of a maximum axial movement of the axle Y1 of the pin 70 with respect to the axle Y2 of the hole 200, at the limit of the difference of the diameters DB of the hole 200 and DS of the stem 72.

In the condition illustrated in Figures 6 B and 7 B, the engagement of the nut 216 and the mutual engagement between the first pair of surfaces 44, 201, and between the second pair of surfaces 45, 219 are activated.

It is evident that the safe function, efficiency, and reliability over time of brake 1 depend - among other things, but significantly - on the maintenance of pin 70 in this defined new position over time and use.

Advantageously, in some embodiments, under the engagement pull of the removable engagement means 211, 214, the cusps of the rippled finishes provided between the pair of surfaces 44, 201 and 45, 219 indent the corresponding engagement surface, also radially fixing the reciprocal position of the two engagement surfaces, and thus of the axis Y1 of the pin 70 and the axis Y2 of the hole 200, respectively.

Advantageously, in at least one embodiment, it is possible that both the reciprocally engaged surfaces of the surfaces pair 44, 201 and 45, 219 have rippled finishes: in this case favourably, the cusps and cavities of the respective rippled finishes mutually couple, ensuring that the reciprocal position of the axes Y1 and Y2 are fixed in time.

Advantageously, according to the present invention, in order to maintain the newly defined position of the pin 70 with respect to the hole 200, and thus of the axis Y1 with respect to the axis Y2, it is applied to the tightening means of the removable engagement means 211, 214 a tightening torque within the limits of that available with normal workshop tools, wherein the mutual engagement of the respective engagement surfaces 44, 201 and 45, 219 ensures the increase in the friction necessary and sufficient to maintain the mutual positions, also over time and under the operating conditions of the brake.

Advantageously, in some embodiments, the rippled finish of the respective engagement surfaces 44, 201 and 45, 219 contributes to and favourably increases this friction.

In practice, it was found that a brake for trailer axles of agricultural type according to the invention is particularly advantageous to ensure that the brake mass is fitted separately and prior to coupling with the brake plate attached to the vehicle axle.

A further advantage of the invention is of guaranteeing that the position of the ideal axis of the brake shoes is coinciding with the longitudinal axis of the brake drum, the wheel hub and the axle, and is fixed in time by simple, easy-to-use and inexpensive means.

A brake for trailer axles of agricultural type thus conceived is susceptible to numerous modifications and variations, all of which fall within the scope of the inventive concept as defined by the appended claims.

In practice, the materials used, as well as the dimensions, can be any according to requirements and to the state of the art.

## Claims

1. A brake for trailer axles of agricultural type (1) comprising at least one axle (10), a wheel hub (20), a brake drum (30) and a brake mass (40) rigidly connected to said axle (10) and comprising at least one brake plate (41), at least two shoes (50 A, 50 B) equipped with friction material (51 A, 51 B) and an articulating pin (70) of said two shoes (50 A, 50B) having a stem (72) removably housed in an axial direction in a hole (200) provided on said brake plate (41), **characterised in that** said pin (70) has at least one first ring (210) having a radially internal surface provided with removable engagement means engaging with said stem (72) and a radially external surface provided with a circumferential engagement groove (213) for said two shoes (50 A, 50 B), **in that** said stem (72) of said pin (70) is housed with radial clearance in said hole (200) and **in that** locking means is provided with a set centre distance between the axis (Y1) of said pin (70) and the axis (Y2) of said hole (200), said locking means comprising at least two reciprocally engaged conjugate surfaces (44, 45, 201, 219).

2. The brake for axles of trailers of agricultural type (1) according to claim 1, **characterised in that** said at least one of said reciprocally engaged conjugate surfaces (44, 45, 201, 219) has a rippled finish.

3. The brake for axles of trailers of agricultural type (1) according to at least one of the preceding claims, **characterised in that** said removable engagement means for engaging said at least one first ring (210) with said stem (72) comprises a thread (211) of the radially internal cylindrical surface of said first ring (210) tightened to a counter thread (212) of said cylindrical stem (72).

4. The brake for axles of trailers of agricultural type (1) according to the preceding claim, **characterised in that** said articulating pin (70) has a tightening head (71) for tightening to said plate (41) at said hole (200) positioned on a side opposite said plate (41) relative to said at least one first ring (210).

5. The brake for axles of trailers of agricultural type (1) according to at least one of claims 1 and 2, **characterised in that** said removable engagement means for engaging said at least one first ring (210) with said stem (72) comprises a shaped profile (214) of the radially internal cylindrical surface of said first ring (210) engaged with a complementarily shaped profile (215) of said cylindrical stem (72), in which said shaped profile (214) and said complementarily shaped profile (215) create a shape engagement that makes said first ring (210) and said stem (72) solidly constrained in rotation but not in translation.

6. The brake for axles of trailers of agricultural type (1) according to the preceding claim, **characterised in that** said articulating pin (70) has a tightening nut (216) for tightening to said plate (41) at said hole (200) positioned on a side opposite said plate (41) relative to said at least one first ring (210).

7. The brake for axles of trailers of agricultural type (1) according to any preceding claim, **characterised in that** said pin (70) has at least one second ring (217) fitted freely rotatably to said stem (72) and having a radially external surface provided with a circumferential engagement groove (218) for said two shoes (50 A, 50 B), in which said second ring (217) is positioned on a side opposite said hole (200) relative to said first ring (210), each of said two shoes (50 A, 50B) comprising a first shoe rib (50 A', 50B') and a second shoe rib (50 A", 50 B") engaged respectively in said circumferential groove (213) of said first ring (210) and in said circumferential groove (218) of said second ring (217).

8. The brake for axles of trailers of agricultural type (1) according to any of the preceding claims 2 to 7, **characterised in that** at least one of said reciprocally engaged conjugate surfaces with a rippled finish includes a surface of said first ring (210).

9. The brake for axles of trailers of agricultural type (1) according to claim 7, **characterised in that** at least one of said reciprocally engaged surfaces with a rippled finish includes a surface of said second ring (217).

10. The brake for axles of trailers of agricultural type (1) according to any of the preceding claims 2 to 9, **characterised in that** both surfaces of reciprocal engagement of at least one pair of surfaces (44, 201) and (45, 219) have a rippled finish.

11. The brake for axles of trailers of agricultural type (1) according to any of the preceding claims 2 to 10, **characterised in that** said rippled finish of said reciprocally engaged conjugate surfaces (44, 45, 201, 219) is in the shape of radial or diamond-shaped rippling.

12. A method for making a brake for trailer axles of agricultural type (1) according to one or more of the preceding claims, comprising the steps of:
- pre-assembling the brake mass (40) consisting of at least two shoes (50 A, 50 B) and at least one first ring (210) engaged with the shoes (50 A, 50 B);
- coupling the brake mass (40) with the brake plate (41) by the pin (70) engaged with radial clearance through a hole (200) in the brake plate (41) with at least the first ring (210) engaged with the shoes (50 A, 50 B);
- activating the brake (1), so that the shoes (50 A, 50 B) are free to perform a radial movement equal to the movement of the axis (Y1) of the pin (70) with respect to the axis (Y2) of the hole (200);
- making the shoes (50 A, 50 B) with the friction material (51 A, 51 B) adhere to the surface of the inner wall of the drum (30);
- self-centring the braking shoes (50 A, 50 B), making a braking activation axis coincide with a longitudinal axis (Y) of the brake drum (30), of the wheel hub (20) and of the axle (10), in this movement the shoes (50 A, 50 B) dragging said pin (70) to a new thus defined position of the axis (Y1) of the pin (70) relative to the axis (Y2) of the hole (200); and
- locking rigidly and firmly in the new position the pin (70) relative to the hole (200) through the removable engagement means, engaging the conjugate surfaces (44, 45, 201, 219) reciprocally.

13. Method for making a brake for axles of trailers of agricultural type (1) according to the preceding claim, wherein at least one of the engagement conjugate surfaces (44, 45, 201, 219) has a rippled finish.

## Patentansprüche

1. Bremse für Anhängerachsen landwirtschaftlicher Art (1), umfassend mindestens eine Achse (10), eine Radnabe (20), eine Bremstrommel (30) und eine Bremsbaugruppe (40), die starr mit der Achse (10) verbunden ist und mindestens eine Bremsplatte (41), mindestens zwei Bremsbacken (50A, 50B) mit Reibmaterial (51A, 51B) sowie einen Gelenkbolzen (70) der beiden Bremsbacken (50A, 50B) umfasst, wobei der Gelenkbolzen (70) einen Schaft (72) aufweist, der lösbar in axialer Richtung in einer in der Bremsplatte (41) vorgesehenen Bohrung (200) aufgenommen ist, **dadurch gekennzeichnet, dass** der Bolzen (70) mindestens einen ersten Ring (210) aufweist, der eine radial innenliegende Oberfläche mit lösbaren Eingriffsmitteln zum Eingriff mit dem Schaft (72) sowie eine radial außenliegende Oberfläche mit einer umlaufenden Eingriffsnut (213) für die beiden Bremsbacken (50A, 50B) aufweist, wobei der Schaft (72) des Bolzens (70) mit radialem Spiel in der Bohrung (200) aufgenommen ist und Verriegelungsmittel vorgesehen sind, die einen festgelegten Achsabstand zwischen der Achse (Y1) des Bolzens (70) und der Achse (Y2) der Bohrung (200) festlegen, wobei die Verriegelungsmittel mindestens zwei miteinander in Eingriff stehende korrespondierende Flächen (44, 45, 201, 219) umfassen.

2. Bremse für Anhängerachsen landwirtschaftlicher Art (1) nach Anspruch 1, **dadurch gekennzeichnet, dass** mindestens eine der miteinander in Eingriff stehenden korrespondierenden Flächen (44, 45, 201, 219) eine geriffelte Oberfläche aufweist.

3. Bremse für Anhängerachsen landwirtschaftlicher Art (1) nach mindestens einem der vorhergehenden Ansprüche, **dadurch gekennzeichnet, dass** die lösbaren Eingriffsmittel zum Verbinden des mindestens einen ersten Rings (210) mit dem Schaft (72) ein Gewinde (211) der radial inneren zylindrischen Oberfläche des ersten Rings (210) umfassen, das mit einem Gegengewinde (212) des zylindrischen Schafts (72) verschraubt ist.

4. Bremse für Anhängerachsen landwirtschaftlicher Art (1) nach dem vorhergehenden Anspruch, **dadurch gekennzeichnet, dass** der Gelenkbolzen (70) einen Spannkopf (71) zum Verspannen an der Platte (41) an der Bohrung (200) aufweist, der auf einer der Platte (41) gegenüberliegenden Seite relativ zu dem mindestens einen ersten Ring (210) angeordnet ist.

5. Bremse für Anhängerachsen landwirtschaftlicher Art (1) nach mindestens einem der Ansprüche 1 und 2, **dadurch gekennzeichnet, dass** die lösbaren Eingriffsmittel zum Verbinden des mindestens einen ersten Rings (210) mit dem Schaft (72) ein Formprofil (214) der radial inneren zylindrischen Oberfläche des ersten Rings (210) umfassen, das mit einem komplementären Formprofil (215) des zylindrischen Schafts (72) in Eingriff steht, wobei das Formprofil (214) und das komplementäre Formprofil (215) eine formschlüssige Verbindung bilden, durch die der erste Ring (210) und der Schaft (72) drehfest, jedoch nicht verschiebefest miteinander verbunden sind.

6. Bremse für Anhängerachsen landwirtschaftlicher Art (1) nach dem vorhergehenden Anspruch, **dadurch gekennzeichnet, dass** der Gelenkbolzen (70) eine Spannmutter (216) zum Verspannen an der Platte (41) an der Bohrung (200) aufweist, die auf einer der Platte (41) gegenüberliegenden Seite relativ zu dem mindestens einen ersten Ring (210) angeordnet ist.

7. Bremse für Anhängerachsen landwirtschaftlicher Art (1) nach einem der vorhergehenden Ansprüche, **dadurch gekennzeichnet, dass** der Bolzen (70) mindestens einen zweiten Ring (217) aufweist, der frei drehbar auf dem Schaft (72) montiert ist und eine radial außenliegende Oberfläche mit einer umlaufenden Eingriffsnut (218) für die beiden Bremsbacken (50A, 50B) aufweist, wobei der zweite Ring (217) auf einer der Bohrung (200) gegenüberliegenden Seite relativ zu dem ersten Ring (210) angeordnet ist, wobei jede der beiden Bremsbacken (50A, 50B) eine erste Backenrippe (50A', 50B') und eine zweite Backenrippe (50A", 50B") umfasst, die jeweils in der umlaufenden Nut (213) des ersten Rings (210) bzw. in der umlaufenden Nut (218) des zweiten Rings (217) eingreifen.

8. Bremse für Anhängerachsen landwirtschaftlicher Art (1) nach einem der Ansprüche 2 bis 7, **dadurch gekennzeichnet, dass** mindestens eine der miteinander in Eingriff stehenden korrespondierenden Flächen mit geriffelter Oberfläche eine Oberfläche des ersten Rings (210) umfasst.

9. Bremse für Anhängerachsen landwirtschaftlicher Art (1) nach Anspruch 7, **dadurch gekennzeichnet, dass** mindestens eine der miteinander in Eingriff stehenden Flächen mit geriffelter Oberfläche eine Oberfläche des zweiten Rings (217) umfasst.

10. Bremse für Anhängerachsen landwirtschaftlicher Art (1) nach einem der Ansprüche 2 bis 9, **dadurch gekennzeichnet, dass** beide Flächen der gegenseitigen Eingriffspaare (44, 201) und (45, 219) eine geriffelte Oberfläche aufweisen.

11. Bremse für Anhängerachsen landwirtschaftlicher Art (1) nach einem der Ansprüche 2 bis 10, **dadurch gekennzeichnet, dass** die geriffelte Oberfläche der miteinander in Eingriff stehenden korrespondierenden Flächen (44, 45, 201, 219) eine radiale oder rautenförmige Riffelung aufweist.

12. Verfahren zur Herstellung einer Bremse für Anhängerachsen landwirtschaftlicher Art (1) nach einem oder mehreren der vorhergehenden Ansprüche, umfassend die Schritte:
- Vormontieren der Bremsbaugruppe (40), bestehend aus mindestens zwei Bremsbacken (50A, 50B) und mindestens einem ersten Ring (210), der mit den Bremsbacken (50A, 50B) in Eingriff steht;
- Koppeln der Bremsbaugruppe (40) mit der Bremsplatte (41) mittels des Bolzens (70), der mit radialem Spiel durch eine Bohrung (200) in der Bremsplatte (41) geführt ist, wobei mindestens der erste Ring (210) mit den Bremsbacken (50A, 50B) in Eingriff steht; - Aktivieren der Bremse (1), sodass die Bremsbacken (50A, 50B) frei eine radiale Bewegung ausführen können, die der Bewegung der Achse (Y1) des Bolzens (70) relativ zur Achse (Y2) der Bohrung (200) entspricht;
- Anlegen der Bremsbacken (50A, 50B) mit dem Reibmaterial (51A, 51B) an die Oberfläche der Innenwand der Trommel (30);
- Selbstzentrieren der Bremsbacken (50A, 50B), indem eine Bremsbetätigungsachse mit einer Längsachse (Y) der Bremstrommel (30), der Radnabe (20) und der Achse (10) zur Deckung gebracht wird, wobei die Bremsbacken (50A, 50B) bei dieser Bewegung den Bolzen (70) in eine neue, dadurch definierte Position der Achse (Y1) des Bolzens (70) relativ zur Achse (Y2) der Bohrung (200) ziehen; und
- starres und festes Verriegeln des Bolzens (70) relativ zur Bohrung (200) in der neuen Position mittels der lösbaren Eingriffsmittel durch gegenseitiges Ineinandergreifen der korrespondierenden Flächen (44, 45, 201, 219).

13. Verfahren zur Herstellung einer Bremse für Anhängerachsen landwirtschaftlicher Art (1) nach dem vorhergehenden Anspruch, wobei mindestens eine der korrespondierenden Eingriffsflächen (44, 45, 201, 219) eine geriffelte Oberfläche aufweist.

## Revendications

1. Frein pour essieux de remorques de type agricole (1) comprenant au moins un essieu (10), un moyeu de roue (20), un tambour de frein (30) et un ensemble de frein (40) rigidement relié audit essieu (10) et comprenant au moins une flasque de frein (41), au moins deux mâchoires (50A, 50B) munies d'un matériau de friction (51A, 51B) et un axe d'articulation (70) desdites deux mâchoires (50A, 50B) comportant une tige (72) logée de manière amovible selon une direction axiale dans un trou (200) prévu sur ladite flasque de frein (41), **caractérisé en ce que** ledit axe (70) comporte au moins une première bague (210) présentant une surface radialement interne munie de moyens d'engagement amovibles coopérant avec ladite tige (72) et une surface radialement externe munie d'une gorge d'engagement circonférentielle (213) pour lesdites deux mâchoires (50A, 50B), **en ce que** ladite tige (72) dudit axe (70) est logée avec jeu radial dans ledit trou (200) et **en ce que** des moyens de verrouillage sont prévus avec un entraxe déterminé entre l'axe (Y1) dudit axe (70) et l'axe (Y2) dudit trou (200), lesdits moyens de verrouillage comprenant au moins deux surfaces conjuguées (44, 45, 201, 219) engagées réciproquement.

2. Frein pour essieux de remorques de type agricole (1) selon la revendication 1, **caractérisé en ce qu'**au moins une desdites surfaces conjuguées engagées réciproquement (44, 45, 201, 219) présente une finition ondulée.

3. Frein pour essieux de remorques de type agricole (1) selon au moins l'une des revendications précédentes, **caractérisé en ce que** lesdits moyens d'engagement amovibles pour engager ladite au moins une première bague (210) avec ladite tige (72) comprennent un filetage (211) de la surface cylindrique radialement interne de ladite première bague (210) serré avec un contre-filetage (212) de ladite tige cylindrique (72).

4. Frein pour essieux de remorques de type agricole (1) selon la revendication précédente, **caractérisé en ce que** ledit axe d'articulation (70) comporte une tête de serrage (71) destinée à être serrée contre ladite flasque (41) au niveau dudit trou (200), ladite tête étant positionnée du côté opposé à ladite flasque (41) par rapport à ladite au moins une première bague (210).

5. Frein pour essieux de remorques de type agricole (1) selon au moins l'une des revendications 1 et 2, **caractérisé en ce que** lesdits moyens d'engagement amovibles pour engager ladite au moins une première bague (210) avec ladite tige (72) comprennent un profil façonné (214) de la surface cylindrique radialement interne de ladite première bague (210) engagé avec un profil complémentaire (215) de ladite tige cylindrique (72), lesdits profils façonnés (214, 215) réalisant un accouplement de forme rendant ladite première bague (210) et ladite tige (72) solidaires en rotation mais non en translation.

6. Frein pour essieux de remorques de type agricole (1) selon la revendication précédente, **caractérisé en ce que** ledit axe d'articulation (70) comporte un écrou de serrage (216) destiné à être serré contre ladite flasque (41) au niveau dudit trou (200), ledit écrou étant positionné du côté opposé à ladite flasque (41) par rapport à ladite au moins une première bague (210).

7. Frein pour essieux de remorques de type agricole (1) selon l'une quelconque des revendications précédentes, **caractérisé en ce que** ledit axe (70) comporte au moins une seconde bague (217) montée libre en rotation sur ladite tige (72) et présentant une surface radialement externe munie d'une gorge d'engagement circonférentielle (218) pour lesdites deux mâchoires (50A, 50B), ladite seconde bague (217) étant positionnée du côté opposé audit trou (200) par rapport à ladite première bague (210), chacune desdites deux mâchoires (50A, 50B) comprenant une première nervure de mâchoire (50A', 50B') et une seconde nervure de mâchoire (50A", 50B") engagées respectivement dans ladite gorge circonférentielle (213) de ladite première bague (210) et dans ladite gorge circonférentielle (218) de ladite seconde bague (217).

8. Frein pour essieux de remorques de type agricole (1) selon l'une quelconque des revendications 2 à 7, **caractérisé en ce qu'**au moins l'une desdites surfaces conjuguées engagées réciproquement avec finition ondulée comprend une surface de ladite première bague (210).

9. Frein pour essieux de remorques de type agricole (1) selon la revendication 7, **caractérisé en ce qu'**au moins l'une desdites surfaces engagées réciproquement avec finition ondulée comprend une surface de ladite seconde bague (217).

10. Frein pour essieux de remorques de type agricole (1) selon l'une quelconque des revendications 2 à 9, **caractérisé en ce que** les deux surfaces d'engagement réciproque d'au moins une paire de surfaces (44, 201) et (45, 219) présentent une finition ondulée.

11. Frein pour essieux de remorques de type agricole (1) selon l'une quelconque des revendications 2 à 10, **caractérisé en ce que** ladite finition ondulée desdites surfaces conjuguées engagées réciproquement (44, 45, 201, 219) est de forme radiale ou en losange.

12. Procédé de réalisation d'un frein pour essieux de remorques de type agricole (1) selon une ou plusieurs des revendications précédentes, comprenant les étapes consistant à :
- préassembler l'ensemble de frein (40) constitué d'au moins deux mâchoires (50A, 50B) et d'au moins une première bague (210) engagée avec lesdites mâchoires (50A, 50B) ;
- accoupler l'ensemble de frein (40) avec la flasque de frein (41) au moyen de l'axe (70) engagé avec jeu radial à travers un trou (200) dans la flasque de frein (41) avec au moins la première bague (210) engagée avec les mâchoires (50A, 50B) ;
- activer le frein (1), de sorte que les mâchoires (50A, 50B) soient libres d'effectuer un mouvement radial égal au déplacement de l'axe (Y1) de l'axe (70) par rapport à l'axe (Y2) du trou (200) ;
- faire adhérer les mâchoires (50A, 50B) munies du matériau de friction (51A, 51B) à la surface de la paroi interne du tambour (30) ;
- auto-centrer les mâchoires de frein (50A, 50B) en faisant coïncider un axe d'activation du freinage avec un axe longitudinal (Y) du tambour de frein (30), du moyeu de roue (20) et de l'essieu (10), les mâchoires (50A, 50B) entraînant dans ce mouvement ledit axe (70) vers une nouvelle position ainsi définie de l'axe (Y1) de l'axe (70) par rapport à l'axe (Y2) du trou (200) ; et
- verrouiller rigidement et fermement dans la nouvelle position l'axe (70) par rapport au trou (200) au moyen des moyens d'engagement amovibles, en engageant réciproquement les surfaces conjuguées (44, 45, 201, 219).

13. Procédé de réalisation d'un frein pour essieux de remorques de type agricole (1) selon la revendication précédente, dans lequel au moins une des surfaces conjuguées d'engagement (44, 45, 201, 219) présente une finition ondulée.
